# DEMANDE DE BREVET EUROPEEN

(11) **EP 4 823 112 A1**
(43) Date de publication de la demande: **14.10.2026**
(21) Numéro de dépôt: 26171030.5
(22) Date de dépôt: 07.04.2026
(51) Int. Cl.: H04R 1/02, B60R 11/02, B60R 13/02

(54) **ENSEMBLE DE GARNISSAGE INTÉRIEUR DE VÉHICULE AUTOMOBILE**

(30) Priorité: 07.04.2025 FR 2503661
(71) Demandeur: Tesca Covering Materials Services, 92800 Puteaux (FR)
(72) Inventeur: GEORGES, Laurent, 92800 PUTEAUX (FR); PONSIN, Aurélie, 92800 PUTEAUX (FR)
(74) Mandataire: Sayettat, Julien Christian

(57) **Abrégé**

L'invention concerne un ensemble (1) de garnissage intérieur de véhicule automobile, comprenant un haut-parleur (5) monté dans une cavité (3) d'un corps (2) et une couche de revêtement (7) dudit corps, ladite couche étant à base de tricot et présentant une zone de transmission sonore (8) tricotée d'une pièce avec ladite couche de revêtement et présentant un tricotage différencié de manière à présenter une perméabilité à l'air accentuée par rapport à celle du reste (9) de ladite couche, de façon à permettre une transmission améliorée des ondes sonores au travers de ladite zone.

## Description

L'invention concerne un ensemble de garnissage intérieur de véhicule automobile.

Il est connu de réaliser un ensemble de garnissage intérieur de véhicule automobile, ledit ensemble comprenant :
- un corps définissant une cavité débouchant par une ouverture vers l'intérieur dudit véhicule,
- un haut-parleur monté dans ladite cavité, ledit haut-parleur présentant une membrane de transmission sonore tournée vers ladite ouverture,
- une couche de revêtement dudit corps, ladite couche étant à base de tricot et présentant une zone de transmission sonore s'étendant en regard de ladite ouverture de manière à l'occulter, ladite zone étant écartée de ladite membrane de manière à éviter tout contact entre eux.

Cependant, avec un tel agencement, se présente le risque d'une transmission sonore insuffisante depuis le haut-parleur vers l'habitacle du véhicule, ceci du fait de l'occultation de l'ouverture par la couche de revêtement.

L'invention a pour but de pallier cet inconvénient.

A cet effet, l'invention propose un ensemble de garnissage intérieur de véhicule automobile, ledit ensemble comprenant :
- un corps définissant une cavité débouchant par une ouverture vers l'intérieur dudit véhicule,
- un haut-parleur monté dans ladite cavité, ledit haut-parleur présentant une membrane de transmission sonore tournée vers ladite ouverture,
- une couche de revêtement dudit corps, ladite couche étant à base de tricot et présentant une zone de transmission sonore s'étendant en regard de ladite ouverture de manière à l'occulter, ladite zone étant écartée de ladite membrane de manière à éviter tout contact entre eux,
ladite zone étant tricotée d'une pièce avec ladite couche de revêtement et présentant un tricotage différencié de manière à présenter une perméabilité à l'air accentuée par rapport à celle du reste de ladite couche, de façon à permettre une transmission améliorée des ondes sonores au travers de ladite zone.

Avec l'agencement proposé, la transmission sonore depuis le haut-parleur vers l'habitacle du véhicule est améliorée du fait de la perméabilité à l'air accentuée en zone de transmission sonore.

En outre, l'utilisation d'une couche de revêtement à base de tricot permet un tricotage différencié dans la zone de transmission sonore, ladite couche étant alors réalisée d'une pièce, ce qui simplifie la réalisation de l'ensemble de garnissage.

D'autres particularités et avantages de l'invention apparaîtront dans la description qui suit, faite en référence aux figures jointes, dans lesquelles :
[Fig.1] est représentation schématique en coupe partielle d'un ensemble selon une première réalisation,
[Fig.2] est représentation schématique en coupe partielle d'un ensemble selon une deuxième réalisation.

En référence aux figures, on décrit un ensemble 1 de garnissage intérieur de véhicule automobile, ledit ensemble comprenant :
- un corps 2 définissant une cavité 3 débouchant par une ouverture 4 vers l'intérieur dudit véhicule,
- un haut-parleur 5 monté dans ladite cavité, ledit haut-parleur présentant une membrane 6 de transmission sonore tournée vers ladite ouverture,
- une couche de revêtement 7 dudit corps, ladite couche étant à base de tricot et présentant une zone de transmission sonore 8 s'étendant en regard de ladite ouverture de manière à l'occulter, ladite zone étant écartée de ladite membrane de manière à éviter tout contact entre eux,
ladite zone étant tricotée d'une pièce avec ladite couche de revêtement et présentant un tricotage différencié de manière à présenter une perméabilité à l'air accentuée par rapport à celle du reste 9 de ladite couche, de façon à permettre une transmission améliorée des ondes sonores au travers de ladite zone.

Dans toute la description, la perméabilité à l'air est notamment mesurée selon la norme ISO 9237:1995.

Selon une réalisation, la zone de transmission sonore 8 de la couche de revêtement 7 présente une perméabilité à l'air au moins 15% supérieure à celle du reste 9 de ladite couche.

Selon une réalisation, la zone de transmission sonore 8 présente, mesurée selon la norme ISO 9237:1995, une perméabilité à l'air minimale de 500 mm/s sous une pression de 200 Pa.

Selon une réalisation, la couche de revêtement 7 présente une masse surfacique comprise entre 100 et 600 g/m².

Selon les réalisations représentées, l'ensemble 1 comprend en outre une sous-couche de masquage additionnel 10 - notamment en tricot tridimensionnel, en mousse à cellules ouvertes ou en non tissé - du haut-parleur recouvrant la zone de transmission sonore 8 et étant tournée vers la cavité 3, ladite sous-couche présentant une perméabilité à l'air supérieure ou égale à celle de ladite zone de transmission, de manière à ne pas entraver la transmission sonore.

Une telle sous-couche de masquage 10 peut s'avérer utile dans le cas où la zone de transmission sonore 8 présente une opacité insuffisante pour bien masquer le haut-parleur 5.

Selon une réalisation, la sous-couche 10 est fixée par collage à la couche de revêtement 7.

Selon une réalisation non représentée, la sous-couche 10 s'étend en outre hors de la zone de transmission 8.

En particulier, la sous-couche 10 s'étend sur toute la couche de revêtement 7, ce qui permet notamment un renforcement de ladite couche de revêtement en zone périphérique de couture.

En outre, on peut prévoir que la sous-couche 10 présente une rigidité suffisante pour rendre imperceptible au toucher, ou de manière visuelle en périphérie de l'ouverture 4, la zone de transmission sonore 8.

Selon une réalisation non représentée, en l'absence de sous-couche 10, on peut prévoir de disposer entre la zone de transmission 8 et le haut-parleur 5, en étant écarté de sa membrane 6 - notamment par interposition d'une grille de protection de ladite membrane - un élément de remplissage perméable à l'air - par exemple en textile tridimensionnel, en ouate ou en mousse à cellules ouvertes - présentant une résistance à la compression suffisante pour rendre imperceptible au toucher, et visuellement en périphérie de l'ouverture 4, ladite zone de transmission.

En particulier, l'élément de remplissage présente une perméabilité à l'air supérieure à celle de la zone de transmission 8.

Selon une réalisation, la couche de revêtement 7 est réalisée en tricot tridimensionnel, de manière à présenter une portance permettant de rendre imperceptible au toucher, et visuellement en périphérie de l'ouverture 4, la zone de transmission sonore 8, ce qui permet de s'affranchir d'un élément de remplissage et/ou d'une sous-couche 10.

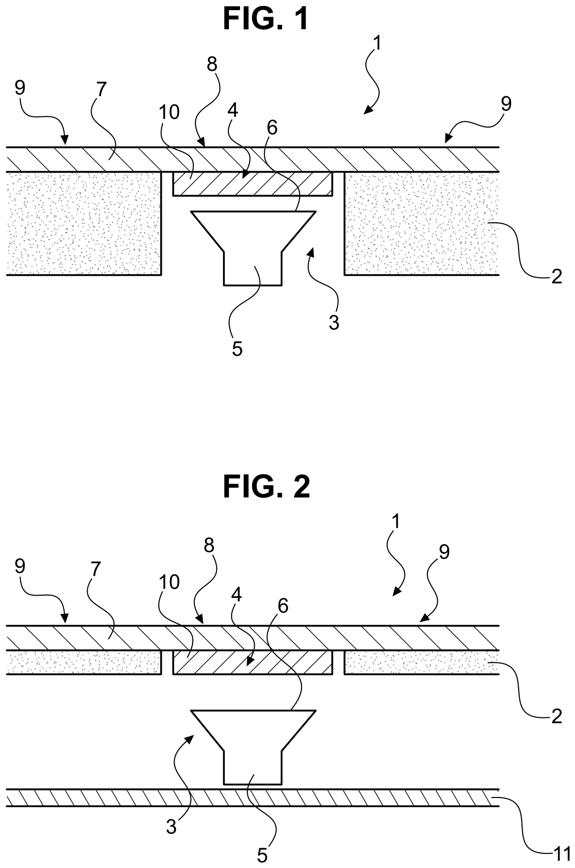

Selon la réalisation représentée en figure 1, l'ensemble 1 est sous forme d'un composant de siège - par exemple sous forme d'un appui-tête ou d'un coussin d'appui latéral -, le corps 2 étant sous forme d'un bloc de matériau élastiquement compressible - notamment en mousse souple, notamment à base de polyuréthanne -, la couche de revêtement 7 étant intégrée à une coiffe de recouvrement dudit bloc.

Selon ce mode de réalisation, la couche de revêtement 7 peut notamment être associée au corps 2 par collage, surmoulage par ledit corps ou chaussage.

Selon la réalisation représentée en figure 2, l'ensemble 1 est sous forme d'une planche de bord ou d'un panneau d'habillage de porte, le corps 2 définissant une paroi mince - par exemple en matériau plastique moulé ou en bois aggloméré, notamment d'épaisseur inférieure à 5 mm -, la cavité 3 s'étendant entre l'ouverture 4 et une paroi métallique 11 issue de la caisse du véhicule.

Selon ce mode de réalisation, la couche de revêtement peut notamment être associée au corps par collage ou surmoulage par ledit corps.

## Revendications

1. Ensemble (1) de garnissage intérieur de véhicule automobile, ledit ensemble comprenant :
• un corps (2) définissant une cavité (3) débouchant par une ouverture (4) vers l'intérieur dudit véhicule,
• un haut-parleur (5) monté dans ladite cavité, ledit haut-parleur présentant une membrane (6) de transmission sonore tournée vers ladite ouverture,
• une couche de revêtement (7) dudit corps, ladite couche étant à base de tricot et présentant une zone de transmission sonore (8) s'étendant en regard de ladite ouverture de manière à l'occulter, ladite zone étant écartée de ladite membrane de manière à éviter tout contact entre eux,
ledit ensemble étant **caractérisé en ce que** ladite zone est tricotée d'une pièce avec ladite couche de revêtement et présente un tricotage différencié de manière à présenter une perméabilité à l'air accentuée par rapport à celle du reste (9) de ladite couche, de façon à permettre une transmission améliorée des ondes sonores au travers de ladite zone.

2. Ensemble (1) selon la revendication 1, **caractérisé en ce que** la zone de transmission sonore (8) de la couche de revêtement (7) présente une perméabilité à l'air au moins 15% supérieure à celle du reste (9) de ladite couche.

3. Ensemble (1) selon l'une des revendications précédentes, **caractérisé en ce que** la zone de transmission sonore (8) présente, mesurée selon la norme ISO 9237:1995, une perméabilité à l'air minimale de 500 mm/s sous une pression de 200 Pa.

4. Ensemble (1) selon l'une quelconque des revendications précédentes, **caractérisé en ce qu'**il comprend en outre une sous-couche de masquage additionnel (10) du haut-parleur (5) recouvrant la zone de transmission sonore (8) et étant tournée vers la cavité (3), ladite sous-couche présentant une perméabilité à l'air supérieure ou égale à celle de ladite zone de transmission.

5. Ensemble (1) selon la revendication 4, **caractérisé en ce que** la sous-couche (10) s'étend en outre hors de la zone de transmission (8).

6. Ensemble (1) selon la revendication 5, **caractérisé en ce que** la sous-couche (10) présente une rigidité suffisante pour rendre imperceptible au toucher, ou de manière visuelle en périphérie de l'ouverture (4), la zone de transmission sonore (8).

7. Ensemble (1) selon l'une quelconque des revendications 1 à 3, **caractérisé en ce qu'**un élément de remplissage perméable à l'air est disposé entre la zone de transmission (8) et le haut-parleur (5) en étant écarté de sa membrane (6), ledit élément présentant une résistance à la compression suffisante pour rendre imperceptible au toucher, et visuellement en périphérie de l'ouverture (4), ladite zone de transmission.

8. Ensemble (1) selon l'une quelconque des revendications précédentes, **caractérisé en ce que** la couche de revêtement (7) est associée au corps (2) par collage, surmoulage par ledit corps ou chaussage.

9. Ensemble (1) selon l'une quelconque des revendications 1 à 8, **caractérisé en ce qu'**il est sous la forme d'un composant de siège, le corps (2) étant sous forme d'un bloc de matériau élastiquement compressible, la couche de revêtement (7) étant intégrée à une coiffe de recouvrement dudit bloc.

10. Ensemble (1) selon l'une quelconque des revendications 1 à 8, **caractérisé en ce qu'**il est sous la forme d'une planche de bord ou d'un panneau d'habillage de porte, le corps (2) définissant une paroi mince, la cavité (3) s'étendant entre l'ouverture (4) et une paroi métallique (11) issue de la caisse du véhicule.
